(19) Europäisches Patentamt
European Patent Office
Office européen des brevets

(11) **EP 4 214 347 B1**

(12) **EUROPÄISCHE PATENTSCHRIFT**

(45) Veröffentlichungstag und Bekanntmachung des Hinweises auf die Patenterteilung:
**30.10.2024   Patentblatt 2024/44**

(21) Anmeldenummer: **21777788.7**

(22) Anmeldetag: **17.09.2021**

(51) Internationale Patentklassifikation (IPC):
$C23C\ 2/12^{(2006.01)}$   $C23C\ 2/40^{(2006.01)}$
$C23C\ 2/28^{(2006.01)}$   $C23C\ 2/26^{(2006.01)}$
$C21D\ 9/46^{(2006.01)}$   $B32B\ 15/01^{(2006.01)}$
$B21B\ 1/22^{(2006.01)}$   $B21D\ 22/02^{(2006.01)}$
$C21D\ 1/673^{(2006.01)}$   $C21D\ 8/00^{(2006.01)}$
$C21D\ 8/02^{(2006.01)}$   $C21D\ 8/04^{(2006.01)}$
$C21D\ 9/00^{(2006.01)}$   $C21D\ 9/48^{(2006.01)}$
$C22C\ 38/02^{(2006.01)}$   $C22C\ 38/04^{(2006.01)}$

(52) Gemeinsame Patentklassifikation (CPC):
C23C 2/12; B32B 15/012; C21D 1/673;
C21D 8/005; C21D 8/0236; C21D 8/0242;
C21D 8/0436; C21D 8/0442; C21D 9/0068;
C21D 9/46; C21D 9/48; C22C 38/02; C22C 38/04;
C23C 2/26; C23C 2/28;                    (Forts.)

(86) Internationale Anmeldenummer:
**PCT/EP2021/075671**

(87) Internationale Veröffentlichungsnummer:
**WO 2022/058531 (24.03.2022 Gazette 2022/12)**

(54) **BLECHBAUTEIL UND VERFAHREN ZU SEINER HERSTELLUNG**

SHEET METAL COMPONENT AND METHOD FOR PRODUCING SAME

ÉLÉMENT STRUCTURAL EN TÔLE ET SON PROCÉDÉ DE FABRICATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.09.2020   DE 102020124488**

(43) Veröffentlichungstag der Anmeldung:
**26.07.2023   Patentblatt 2023/30**

(73) Patentinhaber: **ThyssenKrupp Steel Europe AG**
**47166 Duisburg (DE)**

(72) Erfinder:
• **SCHULZ, Jennifer**
**59427 Unna (DE)**
• **KÖYER, Maria**
**44141 Dortmund (DE)**
• **RUTHENBERG, Manuela**
**44143 Dortmund (DE)**

(74) Vertreter: **Cohausz & Florack**
**Patent- & Rechtsanwälte**
**Partnerschaftsgesellschaft mbB**
**Bleichstraße 14**
**40211 Düsseldorf (DE)**

(56) Entgegenhaltungen:
**WO-A1-2019/002026     WO-A1-2019/192703**

(52) Gemeinsame Patentklassifikation (CPC): (Forts.)
**C23C 2/40;** B21B 1/227; B21D 22/022;
C21D 2261/00

**Beschreibung**

Die Erfindung betrifft ein Blechbauteil, das durch ein warmumgeformtes Stahlflachprodukt gebildet ist. Das Stahlflachprodukt ist durch ein Stahlsubstrat gebildet, das, in Masse-%, aus C: 0,1 - 0,4 %, Mn: 0,5 - 3,0 %, Si: 0,05 - 0,5 %, Cr: 0,005 - 1,0 %, B: 0,0005 - 0,01 %, sowie jeweils optional einem oder mehreren der in der Gruppe "V, Ti, Nb, Al, Ni, Cu, Mo, W" zusammengefassten Legierungselemente mit der Maßgabe, dass die Gehalte an dem jeweils optional vorhandenen Legierungselement wie folgt zu bemessen sind: V: 0,001 - 0,2 %, Ti: 0,001 - 0,1 %, Nb: 0,001 - 0,1 %, Al: 0,01 - 0,2 %, Ni: 0,01 - 0,4 %, Cu: 0,01 - 0,8 %, Mo: 0,002 - 1,0 %, W: 0,001 - 1,0 %, und als Rest aus Eisen und unvermeidbaren Verunreinigungen besteht, wobei zu den unvermeidbaren Verunreinigungen Gehalte von weniger als 0,1 % P, von weniger als 0,05 % S und von weniger als 0,01 % N gehören. Dabei ist auf das Stahlsubstrat eine Korrosionsschutzschicht auf Basis von Aluminium aufgetragen.

Ebenso betrifft die Erfindung ein Verfahren zur Herstellung eines solchen Bauteils.

Ein Bauteil der eingangs genannten Art und ein Verfahren zu seiner Herstellung sind beispielsweise aus den WO 2008/053273 A1, WO 2019/002026 A1 und WO 2019/192703 A1 bekannt.

Als "Stahlflachprodukte" werden hier Walzprodukte verstanden, deren Länge und Breite jeweils wesentlich größer sind als ihre Dicke. Hierzu zählen insbesondere Stahlbänder, Stahlbleche und daraus gewonnene Zuschnitte.

Im vorliegenden Text sind, soweit nicht explizit etwas anderes vermerkt ist, Angaben zu den Gehalten von Legierungsbestandteilen stets auf die Masse bezogen (Angabe in Masse-%).

Eine besondere Herausforderung bei Bauteilen, die durch Warmformung eines mit einem Korrosionsschutz auf Aluminiumbasis beschichteten Stahlflachprodukts erzeugt werden, ergibt sich, wenn derartige Bauteile beispielsweise im Rahmen einer modernen Karosseriefertigung mit einem weiteren Bauteil verklebt werden sollen. Dies gilt unabhängig davon, aus welchem Material das zu verklebende zweite Bauteil besteht.

Klebstoffe, die bisher standardmäßig für warmumgeformte Oberflächen eingesetzt werden, sind entweder für unbeschichtetes Material oder für Zinkoberflächen konzipiert. Aluminiumoberflächen und Oberflächen aus Aluminiumlegierungen weisen gegenüber Oberflächen von Zn-basierten Korrosionsschutzschichten den Nachteil auf, dass die auf der freien Oberfläche der Al-Korrosionsschutzschicht sich bildende Aluminiumoxidschicht eine gute Klebhaftung behindert, da die chemische Anbindung der zinkkonditionierten Klebstoffe auf Aluminiumoxiden deutlich schlechter ist als auf Zinkoberflächen.

Vor diesem Hintergrund hat sich die Aufgabe ergeben, ein Bauteil anzugeben, das an mindestens einer Oberfläche mit einem Aluminium- oder Aluminiumlegierungs-Überzug versehen ist und dabei optimale Voraussetzungen für eine gute Klebhaftung an seinem Überzug bietet.

Ebenso sollte ein Verfahren zur Herstellung eines solchen Bauteils angegeben werden.

Die Erfindung hat diese Aufgabe durch ein Bauteil gelöst, das mindestens die in Anspruch 1 angegebenen Merkmale besitzt.

Hinsichtlich des Verfahrens besteht die Lösung der voranstehend angegebenen Aufgabe darin, dass bei der Herstellung von erfindungsgemäßen Bauteilen die in Anspruch 6 angegebenen Arbeitsschritte absolviert werden. Dabei versteht es sich von selbst, dass ein Fachmann bei der Anwendung des erfindungsgemäßen Verfahrens selbsttätig die Arbeitsschritte ergänzt, von denen er weiß, dass sie bei Verfahren dieser Art im Stand der Technik standardmäßig durchgeführt werden.

Vorteilhafte Ausgestaltungen der Erfindung sind in den abhängigen Ansprüchen angegeben und werden wie der allgemeine Erfindungsgedanke nachfolgend im Einzelnen erläutert.

Ein erfindungsgemäßes Bauteil ist somit in Übereinstimmung mit dem eingangs erläuterten Stand der Technik durch ein warmumgeformtes Stahlflachprodukt gebildet, das

- ein Stahlsubstrat, welches, in Masse-%, aus

    C: 0,1 - 0,4 %,
    Mn: 0,5 - 3,0 %,
    Si: 0,05 - 0,5 %,
    Cr: 0,005 - 1,0 %,
    B: 0,0005 - 0,01 %,
    sowie jeweils optional einem oder mehreren der in der Gruppe "V, Ti, Nb, Al, Ni, Cu, Mo, W" zusammengefassten Legierungselemente mit der Maßgabe, dass die Gehalte an dem jeweils optional vorhandenen Legierungselement wie folgt zu bemessen sind:

    V: 0,001 - 0,2 %,
    Ti: 0,001 - 0,1 %,
    Nb: 0,001 - 0,1 %,

Al: 0,01 - 0,2 %,
Ni: 0,01 - 0,4 %,
Cu: 0,01 - 0,8 %,
Mo: 0,002 - 1,0 %,
W: 0,001 - 1,0 %,

und als Rest aus Eisen und unvermeidbaren Verunreinigungen besteht,
wobei zu den unvermeidbaren Verunreinigungen Gehalte von weniger als
0,1 % P, von weniger als 0,05 % S und von weniger als 0,01 % N gehören, und

- eine auf das Stahlsubstrat aufgetragene Korrosionsschutzschicht auf Basis von Aluminium umfasst.

Ein erfindungsgemäßes Bauteil kann ergänzend zu seiner Warmformgebung im gehärteten Zustand vorliegen. Hierzu kann das Bauteil in an sich bekannter Weise gleichzeitig mit der Warmumformung (so genanntes "Pressformhärten") oder in einem dem Warmformen nachgelagerten Wärmebehandlungsprozess gehärtet worden sein (s. die oben schon erwähnte WO 2008/053273 A1).

Erfindungsgemäß ist an der freien Außenseite der Korrosionsschutzbeschichtung des Bauteils ein Verklebungsabschnitt vorgesehen, der zum Auftrag eines Klebstoffs für eine Verklebung des Blechbauteils mit einem weiteren Bauteil bestimmt ist, wobei die Oberfläche der Korrosionsschutzbeschichtung mindestens im Bereich des Verklebungsabschnitts einen gemäß ISO 25178 bestimmten SDR-Wert von 3 - 30 % aufweist.

Die Erfindung geht von der Erkenntnis aus, dass bei aluminiumbasierten Überzügen auf eine besonders starke mechanische Verankerung des Klebstoffes auf der Oberfläche geachtet werden muss, um eine optimale Kleberhaftung zu erzielen.

Hierzu sieht die Erfindung vor, dass zumindest in dem Verklebungsabschnitt, vorzugsweise aber über die gesamte Oberfläche des erfindungsgemäßen Bauteils, eine Oberflächentextur vorliegt, durch die die für die Anbindung des Klebstoffes an das Bauteil effektiv zur Verfügung stehende reale Oberfläche des Verklebungsabschnitts gegenüber einer perfekt ebenen Oberfläche vergrößert ist. Diese Vergrößerung ergibt sich daraus, dass erfindungsgemäß zumindest im Verklebungsabschnitt in die Oberfläche Berge und Täler eingeformt sind. Durch die Hänge, die beispielsweise von der Bergspitze bis zum jeweiligen Talgrund reichen oder die Täler umgrenzen, ist die effektive Oberfläche im Verklebungsabschnitt, an der bei einer Verklebung die Reaktion zwischen dem Klebstoff und dem beschichteten Stahlblech des Bauteils stattfindet, deutlich größer als die Fläche, die die Oberfläche des Verklebungsabschnitts einnehmen würde, wenn sie optimal eben wäre. Der nach ISO 25178 bestimmte "SDR-Wert" entspricht dabei dem Prozentsatz, um den die reale Oberfläche des Verklebungsabschnitts aufgrund ihrer durch die in die Oberfläche eingeformten Berge und Täler gebildete Texturierung größer ist als die Oberfläche, die im Verklebungsabschnitt vorhanden wäre, wenn dieser absolut eben wäre. Die ISO 25178 regelt auch, dass Rauheitswerte mit dem Weißlichtinterferometer gemessen werden.

Im Hinblick auf die Haltbarkeit einer an einem erfindungsgemäßen Blechbauteil vorgenommenen Klebeverbindung hat es sich nun als günstig herausgestellt, wenn der Stand der Technik-Wert 3 % bis 30 % beträgt.

Bei einem SDR-Wert von weniger als 3 % wäre die reaktionsbeteiligte Oberfläche im Bereich des Verklebungsabschnitts zu gering und es käme keine ausreichende mechanische Verzahnung zwischen der betreffenden Oberfläche und dem Klebstoff zustande, um die erforderliche Klebstoffhaftung zu gewährleisten.

Hohe, über 30 % liegende SDR-Werte sind wünschenswert, wenn ein Blechbauteil lackiert werden soll. Durch den hohen SDR-Wert wird eine optimale Haftung des Lacks an dem Untergrund gewährleistet und ein Lackbild erzielt, das auch den besonders strengen, beispielsweise im Automobilkarosseriebau bestehenden Anforderungen genügt. Allerdings haben praktische Untersuchungen ergeben, dass bei Verklebungen SDR-Werte von mehr als 30 % zu einem ungünstigen Bruchverhalten führen. So ergibt sich bei oberhalb von 30 % liegenden SDR-Werten ein "Bruchflächen SFC" von 5 - 25 %. Bei SDR-Werten von weniger als 3 % ergibt sich dagegen ein "Bruchflächen SFC" von 28 - 51 %. Nur im erfindungsgemäß vorgegebenen Bereich der SDR-Werte von 3 - 30 % zeigen sich normierte "Bruchflächen SFC"-Werte von optimalen 90 - 100 %.

Mit "SFC" ist hier die normierte "SURFACE COHÄSION FRACTURE" bezeichnet. Bei SFC-Werten von 90 - 100 % versagt die Verklebung zwischen Klebstoff und Veredelung, d.h. zwischen dem Klebstoff und der Al-Korrosionsschutzschicht und nicht im Klebstoff oder in der Veredelung selbst.

Wenn die Bruchfläche zerstört wird, dann ist es wünschenswert, dass dies an dieser Stelle geschieht. Zur Ermittlung des SFC-Werts werden Proben mit Klebstoff versehen, miteinander verklebt, nach der für den jeweiligen Klebstoff geltenden Vorschrift ausgehärtet und dann durch eine Zugprüfmaschine voneinander getrennt. Die Bruchflächen werden anschließend optisch ausgewertet. Die Gesamtbruchfläche wird als 100 % angesehen.

Eine erfindungsgemäß vergrößerte Oberfläche wird dadurch erhalten, dass in die Oberfläche des Stahlflachprodukts, das durch Warmformgebung zu dem Blechbauteil verformt wird, Berge und Täler eingeformt werden. SRD-Werte oberhalb von 30 % bedeuten nach den Erkenntnissen der Erfindung hier, dass das Verhältnis Taltiefe zur Talweite so ungünstig werden kann, so dass der Klebstoff bedingt durch seine Viskosität nicht mehr vollständig die Täler zwischen den Spitzen (= Bergen) füllen und so nicht mehr die im Verklebungsabschnitt zur Verfügung stehenden Oberflächen vollständig zur Verzahnung nutzen kann.

Dabei kann sich als besonders problematisch auswirken, dass beim Warmumformungsprozess die Oberflächenbeschaffenheit nicht, wie bei kaltumgeformten Bändern, im Zuge des Auftrags der Korrosionsbeschichtung oder durch ein anschließendes Dressierwalzen fertig eingestellt werden kann.

Dies liegt daran, dass der Überzug während der für den Warmumformungsprozess erforderlichen Erwärmung des Blechmaterials schmelzflüssig wird. Dies führt dazu, dass die Rauheit des unbeschichteten Kaltbandes einen höheren Einfluss auf die Oberflächenrauheit des warmumgeformten Bauteils hat als die nach dem Beschichten des Bandes mit der Al-Beschichtung an deren Oberfläche vorliegende Oberflächentopographie.

Mangels einer einheitlichen Norm zum Prüfen von Klebverbindungen wurden die hier berichteten und definierten Eigenschaften der von an erfindungsgemäßen und nicht erfindungsgemäßen Blechbauteilen vorgenommenen Verklebungen gemäß Stahl-Eisen-Prüfblatt SEP_1220 6 (Entwurf) ermittelt.

Die Erfindung hat den an der Oberfläche eines erfindungsgemäßen, mit ein Al-Beschichtung versehenen Blechbauteils vorliegenden SDR-Wert auch im Hinblick auf eine optimale Warmformbarkeit des Blechmaterials beschränkt, aus dem das Blechbauteil geformt wird. Zu hohe SDR-Werte könnten hohe gemittelte Rautiefen Rz nach sich ziehen. Die gemittelte Rautiefe Rz wird ebenfalls gemäß DIN EN ISO 4287/1 bestimmt und entspricht dem Mittelwert aus Einzelrautiefen von fünf aufeinander folgenden Einzelmessstrecken im Rauheitsprofil. In jedem Messabschnitt werden die Extremwerte zu einer Spannweite addiert und durch die Anzahl der Messabschnitte dividiert. Zu hohe Rz-Werte wirken sich nachteilig im Warmumformwerkzeug aus, da dort die an der Oberfläche des Blechmaterials vorhandenen Spitzen Riefenbildung nach sich ziehen oder zu einem erhöhten Verschmutzungsgrad aufgrund abbrechender Spitzen und damit einhergehender Staubbildung führen können. Vorzugsweise ist die mittlere Rautiefe Rz auf höchstens gleich 2 μm beschränkt, um eine übermäßige Staubbildung bei der Warmumformung zu vermeiden.

Dieser Gefahr kann auch dadurch effektiv entgegengewirkt werden, dass die Spitzenzahlen RPc der Oberfläche des Al-beschichteten, zum jeweiligen erfindungsgemäßen Blechbauteil umzuformenden Stahlflachprodukts nicht größer als 200 pro cm ist. Die normierte Spitzenzahl RPc wird gemäß DIN EN 10049 / DIN EN ISO 4287 bestimmt und entspricht der Anzahl lokaler Spitzen, die nacheinander eine obere Schnittlinie c1 und eine untere Schnittlinie c2 überschreiten. Die Spitzenzahl wird unabhängig von der gewählten Messstrecke auf eine Länge von 1 cm bezogen.

Die reale Oberfläche kann nur mit speziellen Messverfahren und nur im Vergleich zu einer ideal glatten Oberfläche ermittelt werden. Ein einfacher zu ermittelnder Wert ist der voranstehend erwähnte der RPc-Wert. Dieser steht bei Aluminium- und Aluminiumlegierungen nach dem Warmumformen im direkten Zusammenhang mit der realen Oberfläche, die durch den Kennwert SDR beschrieben wird.

Die Größe $F_{real}$ der realen Oberfläche des Verklebungsabschnitts lässt sich dann wie folgt abschätzen:

$$F_{real} = e^{0,2\ RpC}$$

Dagegen kann die Größe $F_{eben}$ der optimal ebenen Oberfläche des Verklebungsabschnitts rein rechnerisch aus deren geometrischen Grenzen ermittelt werden. Der Wert SDR ergibt sich dann zu

$$SDR = (F_{real} - F_{eben})/F_{eben} \times 100\ \%$$

Das Stahlsubstrat eines erfindungsgemäßen Blechbauteils besteht aus einem konventionellen, für diese Zwecke geeigneten Stahl, dessen Zusammensetzung wie folgt gewählt ist:
Kohlenstoff ("C") wirkt im Stahl eines Stahlflachprodukts, aus dem eine erfindungsgemäßes Bauteil geformt ist, verzögernd auf die Bildung von Ferrit und Bainit. Gleichzeitig wird durch die Anwesenheit von C Restaustenit stabilisiert und die Ac3-Temperatur verringert, Der C-Gehalt des Stahls eines erfindungsgemäßen Stahlflachprodukts ist dazu auf Werte von 0,10 Masse-% bis 0,4 Masse-% beschränkt. Ein C-Gehalt von mindestens 0,10 Masse-% ist erforderlich, um die Härtbarkeit des Stahlflachprodukts und die Zugfestigkeit des daraus erfindungsgemäß geformten, pressgehärteten Produkts von mindestens 1.000 MPa zu gewährleisten. Soll ein höheres Festigkeitsniveau erreicht werden, so können dazu C-Gehalte > 0,15 Masse-% eingestellt werden. Wird der C-Gehalt auf Werte > 0,19 Masse-% angehoben, so kann überdies die Härtbarkeit verbessert werden. Ein Bauteil, das aus einem mehr als 0,19 Masse-% enthaltenden, erfindungsgemäß legiertem Stahlflachprodukt besteht, weist eine sehr gute Kombination aus Härtbarkeit und Festigkeit auf. C-Gehalte von mehr als 0,4 Masse-% wirken sich jedoch nachteilig auf die mechanischen Eigenschaften des Stahlflachprodukts aus, da C-Gehalte größer 0,4 Masse-% während eines Presshärtens die Bildung spröden Martensits fördern. Durch hohe C-Gehalte wird darüber hinaus die Schweißbarkeit negativ beeinflusst. Soll eine optimierte Schweißbarkeit gewährleistet werden, kann hierzu der C-Gehalt auf Werte von höchstens 0,3 Masse-%, insbesondere weniger als 0,3 Masse-%, eingestellt werden. Durch eine Verminderung der C-Gehalte auf < 0,25 Masse-% kann die Schweißbarkeit nochmals deutlich verbessert und zusätzlich ein gutes Verhältnis von Kraftaufnahme und maximalem Biegewinkel im Biegeversuch nach VDA238-100 im pressgehärteten Zustand erreicht werden.

Silizium ("Si") wird zur weiteren Erhöhung der Härtbarkeit eines erfindungsgemäß zu einem Bauteil geformten, erfindungsgemäß legierten Stahlflachprodukts sowie die Festigkeit des daraus geformten, pressgehärteten Produkts über Mischkristallverfestigung eingesetzt. Silizium ermöglicht außerdem den Einsatz von Ferro-Silizio-Mangan als Legierungsmittel, was sich begünstigend auf die Produktionskosten auswirkt. Ab einem Si-Gehalt von 0,05 Masse-% stellt sich bereits ein Härtungseffekt ein. Ab einem Si-Gehalt von > 0,15 Masse-% tritt ein signifikanter Anstieg der Festigkeit auf. Si-Gehalte oberhalb von 0,5 Masse-% wirken sich allerdings nachteilig auf das Beschichtungsverhalten aus, insbesondere bei Al-basierten Beschichtungen. Si-Gehalte kleiner 0,4 Masse-% werden daher bevorzugt eingestellt, um die Oberflächenqualität des beschichteten Stahlflachprodukts zu verbessern.

Mangan ("Mn") wirkt in der Legierung des Stahls eines Stahlflachprodukts, aus dem ein erfindungsgemäßes Bauteil geformt ist, als härtendes Element, indem es die Ferrit- und die Bainitbildung stark verzögert. Bei Mangangehalten kleiner 0,5 Masse-% werden während des Presshärtens selbst bei sehr schnellen Abkühlgeschwindigkeiten Ferrit und Bainit gebildet, was vermieden werden sollte. Mn-Gehalte größer 0,9 Masse-% sind daher bevorzugt, wenn ein martensitisches Gefüge insbesondere in Bereichen größerer Umformung gewährleistet werden soll. Mn-Gehalte größer 3,0 Masse-% wirken sich jedoch nachteilig auf die Verarbeitungseigenschaften aus. Insbesondere die Schweißbarkeit ist stark eingeschränkt, weshalb der Mn-Gehalt erfindungsgemäßer Stahlflachprodukte auf höchstens 3,0 Masse-%, insbesondere auf höchstens 1,6 Masse-%, beschränkt ist.

Chrom ("Cr") ist im Stahl eines Stahlflachprodukts, aus dem ein erfindungsgemäßes Bauteil geformt ist, in Gehalten von 0,005 - 1,0 Masse-% vorhanden. Cr beeinflusst die Härtbarkeit des Stahlflachprodukts, indem es die diffusive Umwandlung während des Presshärtens verlangsamt. Cr wirkt in erfindungsgemäßen Stahlflachprodukten ab einem Gehalt von 0,005 Masse-% günstig auf die Härtbarkeit, wobei ein Cr-Gehalt > 0,1 Masse-% für eine sichere Prozessführung, vor allem zur Verhinderung der Bainitbildung, bevorzugt wird. Enthält der Stahl mehr als 1,0 Masse-% Chrom, so verschlechtert sich allerdings das Beschichtungsverhalten. Um eine optimierte Oberflächenqualität zu erhalten, kann der Cr-Gehalt auf höchstens 0,4 Masse-% begrenzt sein.

Bor ("B") kann dem Stahl des Stahlflachprodukts, aus dem ein erfindungsgemäßes Bauteil geformt ist, optional hinzu legiert werden, um die Härtbarkeit des Stahlflachprodukts zu verbessern. Auf den Austenitkorngrenzen angelagerte Boratome oder Borausscheidungen verringern die Korngrenzenenergie, wodurch die Nukleation von Ferrit während des Presshärtens unterdrückt wird. Ein deutlicher Effekt auf die Härtbarkeit tritt ab B-Gehalten von mindestens 0,0005 Masse-% auf. Bei B-Gehalten über 0,01 Masse-% bilden sich hingegen vermehrt Borkarbide, Bornitride oder Bornitrokarbide, welche wiederum bevorzugte Keimstellen für die Nukleation von Ferrit darstellen und den härtenden Effekt absenken würden. Aus diesem Grund ist der B-Gehalt erfindungsgemäß auf höchstens 0,01 Masse-% beschränkt.

Um bestimmte Eigenschaften des Stahls bzw. des daraus erzeugten Stahlflachprodukts einzustellen, können im Stahl jeweils optional ein Element, zwei oder mehr Legierungselemente der in der Gruppe "V, Ti, Nb, Al, Ni, Cu, Mo, W" zusammengefassten Legierungselementen zugegeben sein, wobei die Gehalte an dem oder den jeweils optional vorhandenen Legierungselement(en) wie folgt zu bemessen sind:

Schon kleinste Mengen an Vanadium ("V") von mindestens 0,001 Masse-% können im Stahl eines erfindungsgemäß verarbeiteten Stahlflachprodukts vorhandenen freien Kohlenstoff bei der Anlagerung an Versetzungen behindern. Hierdurch wird die Alterungsbeständigkeit des Stahls verbessert. Ab einem V-Gehalt von 0,2 Masse-% tritt keine Steigerung dieses Effekts mehr ein. Die alterungshemmende Wirkung von Vanadium ist bei V-Gehalten bis zu 0,009 Masse-% besonders ausgeprägt, wobei sich ein maximaler Effekt ab einem V-Gehalt von 0,002 Masse-% einstellt.

Titan ("Ti") kann dem Stahl eines erfindungsgemäß zu einem Bauteil geformten Stahlflachprodukts bei Bedarf in Gehalten von 0,001 - 0,1 Masse-% zugegeben sein, um im Stahl vorhandenen Stickstoff abzubinden. Um dies sicher zu erreichen, kann ein Ti-Gehalt %Ti vorgesehen sein, der mindestens dem 3,42-fachen des Gehalts %N an Stickstoff beträgt (%Ti = 3,42 x %N).

Aluminium ("Al") kann im Stahl eines erfindungsgemäß zu einem Bauteil geformten Stahlflachprodukts optional in Gehalten von 0,01 - 0,2 Masse-% vorhanden sein. Dabei erweisen sich Al-Gehalte von höchstens 0,1 Masse-% als besonders wirkungsvoll. Aluminium wird als Desoxidationsmittel zur Abbindung von Sauerstoff eingesetzt. Zudem hemmt Aluminium die Zementitbildung. Zur sicheren Abbindung von Sauerstoff werden mindestens 0,01 Masse-% Al im Stahl benötigt. Da allerdings auch die Ac3-Temperatur mit steigendem Al-Legierungsgehalt deutlich nach oben verschoben wird, ist der Al-Gehalt auf 0,2 Masse-% begrenzt. Bei Gehalten von mehr als 0,2 Masse-% würde Al die Umwandlung in Austenit vor der Warmumformung so stark behindern, dass die Austenitisierung nicht mehr zeit- und energieeffizient durchgeführt werden könnte.

Niob ("Nb") kann dem Stahl eines erfindungsgemäß zu einem Bauteil geformten Stahlflachprodukts bei Bedarf in Gehalten von 0,001 - 0,1 Masse-% zugegeben sein, um durch die Bildung von Eisenkarbiden freien Kohlenstoff zu binden, was sich günstig auf das Alterungsverhalten auswirkt.

Nickel ("Ni") stabilisiert die austenitische Phase des Stahls eines erfindungsgemäß zu einem Bauteil geformten Stahlflachprodukts und kann daher optional hinzulegiert werden, um die Ac3-Temperatur zu verringern und die Bildung von Ferrit und Bainit zu unterdrücken. Nickel hat darüber hinaus einen positiven Einfluss auf die Warmwalzbarkeit. Gehalte von mehr als 0,4 Masse-% tragen zu den positiven Einflüssen der Anwesenheit von Ni jedoch nicht mehr bei. Bevorzugt ist daher der Ni-Gehalt auf weniger als 0,4 Masse-% beschränkt.

Durch die optionale Zugabe von mindestens 0,1 Masse-% Cu kann die Härtbarkeit erhöht werden. Darüber hinaus verbessert Kupfer den Widerstand gegen atmosphärische Korrosion unbeschichteter Bleche oder Schnittkanten. Durch die Anwesenheit von Kupfer kann sich jedoch die Warmwalzbarkeit verschlechtern.

Diesem Effekt kann durch die Zugabe von mindestens 0,01 Masse-% Ni entgegengewirkt werden. Ab einem Gehalt von 0,8 Masse-% Cu verschlechtert sich die Warmwalzbarkeit aufgrund niedrigschmelzender Cu-Phasen an der Oberfläche so deutlich, dass Gehalte von mehr als 0,8 Masse-% vermieden werden sollten.

Molybdän ("Mo") kann zur Verbesserung der Prozessstabilität optional dem Stahl eines erfindungsgemäß zu einem Bauteil geformten Stahlflachprodukts hinzugegeben werden. Mo verlangsamt die Ferritbildung deutlich. Ab Gehalten von 0,002 Masse-% Mo bilden sich dynamisch Molybdän-Kohlenstoff Cluster bis hin zu ultrafeinen Molybdänkarbiden auf den Korngrenzen, welche die Beweglichkeit der Korngrenze und somit diffusive Phasenumwandlungen deutlich verlangsamen. Zudem wird durch Mo die Korngrenzenenergie verringert, was die Nukleationsrate von Ferrit verringert. Eine effektive Nutzung der positiven Einflüsse von Mo ist dabei dadurch gewährleistet, dass der Mo-Gehalt auf höchstens 1,0 Masse-% beschränkt ist.

Wolfram ("W") kann optional in Gehalten von 0,001 - 1,0 Masse-% zur Verlangsamung der Ferritbildung hinzulegiert werden. Ein positiver Effekt auf die Härtbarkeit ergibt sich bereits bei W-Gehalten von mindestens 0,001 Masse-%. Aus Kostengründen wird maximal 1,0 Masse-% Wolfram hinzulegiert. Der Rest des Stahls, aus dem das Stahlsubstrat eines erfindungsgemäß warmgeformten Stahlflachprodukts und des daraus durch die Warmumformung erhaltenen Blechbauteils besteht, sind Eisen und unvermeidbare Verunreinigungen, wobei zu den unvermeidbaren Verunreinigungen Gehalte von weniger als 0,1 Masse-% P, von weniger als 0,05 % S und von weniger als 0,01 % N gehören. Die Gehalte an den Verunreinigungen sind dabei jeweils so gering, dass sie keine Wirkung auf die Eigenschaften des Stahls und des daraus erzeugten Blechs haben.

Dazu ist die Summe der Gehalte an den Verunreinigungen vorzugsweise auf weniger als 2 Masse-% beschränkt.

Die Korrosionsschutzbeschichtung, die auf einem zu einem erfindungsgemäßen warmgeformten Stahlflachprodukt und damit einhergehend auf dem erfindungsgemäßen Blechbauteil vorhanden ist, kann aus Reinaluminium oder einer Aluminiumlegierung bestehen. Dementsprechend kann die Korrosionsschutzbeschichtung aus Aluminium bestehen, wobei in der als Korrosionsschutz vorgesehenen Al-Legierungsschicht neben den technisch unvermeidbaren Verunreinigungen jeweils optional, in Masse-%, 3 - 15 % Si, 2 - 3,5 % Fe und / oder mindestens einem Erdalkali- oder Übergangsmetall enthalten sein können, wobei die Gehalte an den Erdalkali- oder Übergangsmetallen in Summe 0,1 - 0,5 % betragen. Der Gehalt an den Verunreinigungen ist dabei typischerweise auf höchstens 1 % beschränkt.

Der Si-Gehalt der Korrosionsschutzschicht trägt zur ausreichenden aber nicht maximalen Ausbildung der Legierungsschicht Eisen-Aluminium bei und sorgt damit für eine ausreichend gute Haftung bei ebenfalls gegebener Kaltumformung. Dieser Effekt kann besonders sicher bei Gehalten von mindestens 7 Masse-% Si, insbesondere mindestens 9 Masse-% Si, erzielt werden. Dabei kann die Wirkung von Si im erfindungsgemäß vorgesehenen Korrosionsschutzüberzug bei Gehalten von höchstens 12 Masse-% Si, insbesondere höchstens 10 Masse-% Si, besonders effektiv genutzt werden.

Eisen ("Fe") kann im erfindungsgemäß vorgesehenen Korrosionsschutzüberzug eines erfindungsgemäßen Blechbauteils in Gehalten von 2 - 3,5 Masse-% vorhanden sein. In diesen Gehalten im Überzug vorhandenes Fe trägt zur Bildung einer Legierungsschicht zwischen dem Stahlsubstrat und der Beschichtung bei und unterstützt auf diese Weise die Haftung des Überzuges.

Die Korrosionsschutzschicht kann mindestens ein Erdalkali- oder Übergangsmetall in Gehalten von 0,05 - 2 Masse-% enthalten, um an der freien Oberseite der Korrosionsschutzschicht eine dünne, deckende Oxidschicht auszubilden. Besonders günstig erweist sich die Anwesenheit mindestens eines Erdalkali- und / oder mindestens eines Übergangsmetalls, wenn die Summe der Gehalte an diesen Metallen im Überzug eines erfindungsgemäßen Blechbauteils 0,1 - 0,5 Masse-%, insbesondere 0,15 - 0,4 Masse-%, beträgt. Von den in Frage kommenden Erdalkalimetallen und Übergangsmetallen haben sich als besonders zielführend Magnesium und Calcium herausgestellt, aber es kann auch Strontium, Barium, Zirkon und Titan verwendet werden.

Grundsätzlich kann zum Auftrag eines erfindungsgemäß vorgesehenen Schutzüberzugs auf das jeweilige Stahlsubstrat jedes Verfahren angewendet werden, mit dem eine Abscheidung von ausreichend dünnen Schichten auf dem Stahlsubstrat möglich ist. Besonders geeignet ist hierzu ein konventionelles Schmelztauchbeschichten ("Feueraluminieren"), das es erlaubt, besonders wirtschaftlich einen Korrosionsschutz auf einem Stahlblech zu erzeugen.

Den voranstehenden Erläuterungen entsprechend umfasst ein erfindungsgemäßes Verfahren zur Herstellung eines erfindungsgemäßen Blechbauteils, folgende Arbeitsschritte:

a) Bereitstellen eines warmgewalzten Stahlflachprodukts, das ein Stahlsubstrat, welches, in Masse-%, aus C: 0,1 - 0,4 %, Mn: 0,5 - 3,0 %, Si: 0,05 - 0,5 %, Cr: 0,005 - 1,0 %, B: 0,0005 - 0,01 %,sowie jeweils optional einem oder mehreren der in der Gruppe "V, Ti, Nb, Al, Ni, Cu, Mo, W" zusammengefassten Legierungselemente mit der Maßgabe, dass die Gehalte an dem jeweils optional vorhandenen Legierungselement wie folgt zu bemessen sind: V: 0,001 - 0,2 %, Ti: 0,001 - 0,1 %, Nb: 0,001 - 0,1 %, Al: 0,01 - 0,2 %, Ni: 0,01 - 0,4 %, Cu: 0,01 - 0,8 %, Mo: 0,002 - 1,0 %, W: 0,001 - 1,0 %, und als Rest aus Eisen und unvermeidbaren Verunreinigungen besteht, wobei zu den unvermeidbaren Verunreinigungen Gehalte von weniger als 0,1 % P, von weniger als 0,05 % S und von weniger als 0,01 % N gehören,

b) optionales Beizen des Warmbands,

c) Kaltwalzen des Warmbands zu einem Kaltband, wobei das Kaltwalzen optional in mehr als einem Walzschritt durchgeführt wird und wobei ebenso optional zwischen den Kaltwalzschritten das jeweils nach dem vorangegangenen Kaltwalzschritt erhaltene kaltgewalzte Band geglüht wird,

d) Beschichten des Kaltbands mit einer Korrosionsschutzbeschichtung auf Basis von Aluminium,

e) Dressierwalzen des mit der Korrosionsschutzschicht versehenen Kaltbands,

f) Abteilen eines Zuschnitts von dem dressiergewalzten Kaltband,

g) Erwärmen des Zuschnitts auf eine Warmumformtemperatur von 850 - 950 °C,

h) Warmumformen des erwärmten Zuschnitts zu dem Bauteil.

Optional kann das im Arbeitsschritt h) erhaltene Bauteil ergänzend zu seiner Warmformgebung gehärtet werden. Diese Härtung kann in an sich bekannter Weise gleichzeitig mit der im Arbeitsschritt h) erfolgenden Warmumformung oder in einem dem Warmumformen nachgelagerten Wärmebehandlungsprozess stattfinden. Wird das Warmumformen und Härten in einem Zug durchgeführt, spricht man auch von einem "Pressformhärten" oder von einem "einstufigen" Warmformgebungs- und Härtungsprozess. Ein Prozess, bei dem das Stahlflachprodukt zunächst warmumgeformt und dann in einem zweiten Schritt durch eine geeignete Wärmebehandlung gehärtet wird, wird dagegen als "zweistufiger Prozess" bezeichnet. Unabhängig davon, ob eine kombinierte, einstufige oder eine in zwei Stufen erfolgende Warmformgebung und Härtung durchgeführt wird, sind die dazu erforderlichen Maßnahmen und einzustellenden Prozessparameter dem Fachmann bekannt (s. beispielsweise die oben schon erwähnte WO 2008/053273 A1).

Erfindungsgemäß weist dabei das Kaltband durch das Kaltwalzen (Arbeitsschritt c)) und/oder das Dressierwalzen (Arbeitsschritt e)) mindestens in einem Oberflächenabschnitt der freien Außenseite der Korrosionsschutzschicht, der beim fertig warmumgeformten Bauteil einen Verklebungsabschnitt bildet, der zum Auftrag eines Klebstoffs für eine Verklebung des Blechbauteils mit einem weiteren Bauteil vorgesehen ist, eine Oberflächentextur auf, die ein Wellenlängenmaximum aufweisen, dass in einem von 0,1 mm bis 1,0 mm reichenden Bereich liegt.

Bei der üblichen Erzeugung von Blechbauteilen aus Stahlflachprodukten, die mit einer Korrosionsschutzbeschichtung versehen sind, werden nacheinander die Arbeitsschritte "Erzeugen des Stahls und eines daraus gegossenen Vorproduktes, wie Bramme, Dünnbramme oder gegossenes Band, im Stahlwerk", "Warmwalzen des Vorproduktes zu einem warmgewalzten Band ("Warmband")", "Beizen des Warmbands zur Entfernung von auf dem Band haftenden Zunder- und Verunreinigungsrückständen", "Kaltwalzen des Warmbands zu einem kaltgewalzten Band ("Kaltband")", "Beschichten des Kaltbands mit der Al-basierten Korrosionsschutzbeschichtung", "Dressierwalzen und/oder Finish-Behandlung der Oberfläche des mit der Korrosionsschutzbeschichtung versehenen Kaltbands", "Durcherwärmen des mit der Korrosionsschutzbeschichtung versehenen Kaltbands auf eine Warmumformtemperatur" und "Warmumformen des auf die Warmumformtemperatur erwärmten Kaltbands zu dem Blechbauteil" durchlaufen, wobei selbstverständlich zwischen den hier explizit genannten Arbeitsschritten weitere Arbeitsschritte absolviert werden können, die bei der konventionellen fachmännischen Herstellung und Verarbeitung von kaltgewalzten Bändern zu Blechbauteilen durchgeführt werden, um einen ordnungsgemäßen Arbeitsablauf und ein optimiertes Arbeitsergebnis zu gewährleisten.

Beispielhaft kann als Anhalt für die Parameter, die bei den bei der Erzeugung eines erfindungsgemäß zu Blechbauteilen geformten Kaltbands im Einzelnen durchlaufenen Arbeitsschritte eingestellt werden, Folgendes herangezogen werden:

a) Bereitstellen eines warmgewalzten Stahlflachprodukts:

- In konventioneller Weise erfolgendes Erschmelzen einer Stahlschmelze, die nach Maßgabe der Erfindung entsprechend den voranstehend hierzu gegebenen Erläuterungen zusammengesetzt ist, und in ebenso konventioneller Weise erfolgendes Vergießen der Stahlschmelze zu einer Bramme;

- Erwärmen der Bramme in einem Ofen auf eine 1200 - 1270 °C betragende Brammenziehtemperatur Bzt, mit der die Bramme aus dem Ofen gezogen wird;

- Warmwalzen der Bramme zu einem 3 - 5 mm dicken warmgewalzten Band ("Warmband"), wobei das Warmwalzen ein Vorwalzen mit einer Dickenreduktion von 80 - 90 % und ein Fertigwalzen mit einer Dickenreduktion von 85 - 95 % umfasst, wobei der über das Warmwalzen insgesamt erzielte Umformgrad 95 - 99,5 % beträgt, wobei im letzten Walzstich eine Dickenreduktion $\Delta dF$ von 1 - 25 % erzielt wird und wobei die Warmwalzendtemperatur 850 - 950 °C beträgt;

- Abkühlen des erhaltenen Warmbands auf eine Haspeltemperatur von 620 - 780 °C, wobei die Abkühlgeschwindigkeit 4 - 30 Kls beträgt;

- Haspeln des warmgewalzten Stahlflachprodukts zu einem Coil;

b) Beizen des Warmbands zum Entfernen des Zunders;
c) ein oder mehrstufiges Kaltwalzen des Warmbands zu einem kaltgewalzten Band ("Kaltband"), wobei der über das Kaltwalzen erzielte Gesamtumformgrad 70 - 90 % beträgt.

Bei der üblichen Herstellung von kaltgewalzten, schmelztauchbeschichteten Stahlbändern wird somit ein Oberflächenfinish nach dem Beschichten durchgeführt, bei dem die Oberflächenstruktur für die nachfolgenden Arbeitsschritte optimiert wird. Allerdings zeigt sich, dass ein derartiges Oberflächenfinish keinen Einfluss auf die Oberflächentopographie hat, die bei durch Warmumformen von Kaltband bzw. daraus gewonnenen Zuschnitten erzeugten Blechbauteilen vorliegt.

Für die erfindungsgemäß zumindest im Bereich des Verklebungsabschnitts des Blechbauteils erzeugte Oberflächentopografie eines warmumgeformten Produktes ist vielmehr schon die Rauheit des Kaltbandes maßgeblich. Dies gilt insbesondere dann, wenn die Korrosionsschutzbeschichtung durch Schmelztauchbeschichten ("Feueraluminieren") auf das Stahlsubstrat des Kaltbands aufgetragen wird. Durch den Auftrag der Al-Schmelze wird das Band zunächst eingeglättet, indem sich die Schmelze über die Berge und Täler der Oberflächenstruktur legt und diese abdeckt. Im Zuge der für die Warmumformung erforderlichen Wiedererwärmung, bei der das kaltgewalzte, schmelztauchbeschichtete Stahlflachprodukt auf Temperaturen von mehr als 600 °C erwärmt wird, erweicht der Überzug wieder und bildet so die Rauheit des Kaltbandes nach.

Um durch das Kaltwalzen die erfindungsgemäß vorgesehene Oberflächentextur in dem Abschnitt der Oberfläche der Korrosionsschutzschicht, der beim späteren Bauteil den Verklebungsabschnitt bildet, zu erzeugen, kann das jeweilige Kaltband im letzten Walzschritt des Kaltwalzens mit einem Kaltwalzgrad von 10 - 75 %, mit einer Bandgeschwindigkeit am Einlauf des Walzgerüsts von 10 - 600 m/min, mit einer Bandgeschwindigkeit am Auslauf des Walzgerüsts von 20 - 1000 m/min, mit einer Walzkraft von 150 - 1300 kN und einer Zugkraft von 5 - 110 kN kaltgewalzt werden. Die Walzenrauheit Ra beträgt 1,0 - 5,0 $\mu$m bei einer Spitzenzahl Rpc von 15 - 50 1/$\mu$m.

Ebenso kann zur Ausprägung der erfindungsgemäß vorgesehenen, durch einen SDR-Wert von 3 - 30 % gekennzeichneten Oberflächenzustand im Bereich des Verklebungsabschnitts des erfindungsgemäßen Blechbauteils beitragen, dass der Zuschnitt im Arbeitsschritt g) über eine Dauer von 2 - 15 min bei der Warmumformtemperatur gehalten wird, um anschließend zu dem Blechbauteil umgeformt zu werden.

Nachfolgend wird die Erfindung anhand von Ausführungsbeispielen näher erläutert.

In einem ersten Versuch ist ein als Stahlsubstrat dienendes Stahlband mit der in Tabelle 1 angegebenen Zusammensetzung durch konventionelles Schmelztauchbeschichten mit einem Korrosionsschutzüberzug überzogen worden, der aus 10 Masse-% Si, 3,5 Masse-% Fe, bis zu 1 Masse-% unvermeidbaren Verunreinigungen und als Rest aus Aluminium bestand. Das Auflagengewicht wurde je Seite des Stahlbands auf 70 g/m$^2$ eingestellt.

Aus dem Stahlband wurden Platinen gestanzt, die dann bei einer Glühtemperatur von 925 °C über eine Glühdauer von 5 Minuten geglüht worden sind, um anschließend zu jeweils einem Blechbauteil warmumgeformt zu werden. Der in einem Verklebungsabschnitt an der freien Oberfläche der erhaltenen Blechbauteile gemäß ISO 25178 bestimmte SDR-Wert lag bei 18 %.

Die Bauteile wurden mittels im Bereich des Verklebungsabschnitts aufgetragenem Epoxy-Klebstoff Betamate 1620 MB, der von der Dow Automotive angeboten wird (s. Datenblatt "BETAMATE™ 1620 MB", herausgegeben von der Dow Europe GmbH, Edition 02, 29.06.2010), miteinander verklebt. Bei anschließender Überprüfung der Bruchfläche konnten normiert 95 % der idealen Bruchfläche SFC erreicht werden.

In einer zusätzlichen Versuchsreihe sind vier Stahlschmelzen A - D erzeugt worden, deren Zusammensetzungen in Tabelle 2 angegeben sind. Die Zusammensetzung der Stahlschmelzen A - D entsprach der Zusammensetzung von konventionellen Stählen, die für die Erzeugung von Stahlflachprodukten vorgesehen sind, aus denen sich in ebenso bekannter Weise durch Warmumformung und damit einhergehender ausreichend schneller Abkühlung oder durch eine anschließend erfolgende Wärmebehandlung, die eine Abkühlung mit ausreichender Abkühlgeschwindigkeit umfasst, Blechbauteile mit hoher Festigkeit erzeugen lassen.

Aus den Stählen A - D sind in konventioneller Weise Warmbänder erzeugt worden, die in ebenfalls üblicher Weise eine Beizbehandlung durchlaufen haben und anschließend in mehreren Stufen zu jeweils einem Kaltband mit einer Dicke von 1,5 mm kaltgewalzt worden sind.

Bis auf seine letzte Stufe ist auch das Kaltwalzen in konventioneller Weise durchgeführt worden.

In der letzten Stufe des Kaltwalzens sind dagegen die Parameter "Geschwindigkeit am Einlauf des Kaltwalzgerüsts", "Geschwindigkeit am Auslauf des Kaltwalzgerüsts", "Walzkraft" und "auf das kaltgewalzte Band wirkender Zug" im Mittel wie in Tabelle 3 angegeben eingestellt worden, um auf dem erhaltenen Kaltband eine definierte Oberflächenrauigkeit zu erhalten.

Für die auf diese Weise erhaltenen Kaltbänder K1 - K6 sind gemäß ISO 25178 die SDR-Werte der Oberfläche bestimmt worden.

Anschließend sind die Kaltbänder K1 - K6 in konventioneller Weise mit unterschiedlich zusammengesetzten Al-Korrosionsschutzbeschichtungen Z1 - Z3 beschichtet worden, deren Zusammensetzungen in Tabelle 4 angegeben sind. Auch an den Oberflächen der mit der jeweiligen Korrosionsschutzschicht Z1 - Z3 belegten Kaltbändern K1 - K6 sind gemäß ISO 25178 die SDR-Werte bestimmt worden.

Von den schmelztauchbeschichteten Kaltbändern K1 - K6 sind Zuschnitte abgeteilt worden, die in einem Durchlaufofen über eine Glühdauer tG auf eine Glühtemperatur TG erwärmt und dort gehalten worden sind. Die Zuordnung der Korrosionsschutzbeschichtungen Z1 - Z3 zu den aus den Stählen A - D erzeugten Kaltbändern K1 - K6, das jeweils erzielte Auflagengewicht AG je Seite, die jeweilige Glühdauer tG und die jeweilige Glühtemperatur TG sind in Tabelle 5 verzeichnet.

Die auf die Glühtemperatur TG erwärmten Zuschnitte sind auf konventionelle Weise in einem Warmpresswerkzeug zu jeweils einem Blechbauteil warmumgeformt worden. Nach der Abkühlung auf Raumtemperatur sind die SDR-Werte an den fertig geformten Blechbauteilen zumindest in dem Verklebungsabschnitt der Oberfläche bestimmt worden, in dem anschließend eine Verklebung vorgenommen werden sollte.

Die Blechbauteile sind dann mit gleichartigen Bauteilen mittels des Klebstoffs Betamate 1620 MB nach Herstellvorschrift miteinander verklebt und der SFC-Wert der Verklebung in der oben schon erläuterten Weise bestimmt worden.

Die für die Kaltbänder K1 - K6 nach dem Kaltwalzen ("SDR Kaltband"), nach dem Schmelztauchbeschichten ("SDR schmelztauch") und am aus dem jeweiligen Kaltband K1 - K6 warmgeformten Blechbauteil ("SDR Blechbauteil") ermittelten SDR-Werte sowie die für die Verklebung ermittelte "normierte Bruchfläche SFC" sind in Tabelle 6 angegeben.

Die Versuche bestätigen, dass die bei den Kaltbändern vorhandenen SDR-Werte im technischen Sinne gleichwertig auch beim fertigen Blechbauteil vorliegen und dass die auf erfindungsgemäße Weise am Blechbauteil erzeugten SDR-Werte zu Bruchflächen SFC führen, die für eine optimale Klebeignung stehen.

Tabelle 1, Angaben in Masse-%, Rest Fe und unvermeidbare Verunreinigungen

| C | Si | Mn | P | S | Al | Cr+Mo | Ti | B |
|------|------|------|-------|-------|-------|-------|------|-------|
| 0,22 | 0,35 | 1,35 | 0,022 | 0,008 | 0,010 | 0,4 | 0,03 | 0,004 |

Tabelle 2, Angaben in Masse-%, Rest Fe und unvermeidbare Verunreinigungen

| Stahl | C | Si | Mn | P | S | Al | Nb | Ti | B |
|-------|------|------|------|-------|-------|-------|------|-------|-------|
| A | 0,08 | 0,33 | 0,95 | 0,025 | 0,020 | 0,013 | 0,09 | 0,010 | 0,005 |
| B | 0,23 | 0,38 | 1,3 | 0,020 | 0,007 | 0,013 | - | 0,03 | 0,004 |
| C | 0,38 | 0,37 | 1,38 | 0,020 | 0,008 | 0,013 | - | 0,10 | 0,005 |
| D | 0,20 | 0,35 | 1,35 | 0,020 | 0,008 | 0,012 | - | 0,02 | 0,004 |

Tabelle 3

| Stahl | Geschwindigkeit Einlauf | Geschwindigkeit Auslauf | Walzkraft | Zug |
|-------|-------------------------|-------------------------|-----------|-------|
| A | 280 m/min | 620 m/min | 795 kN | 60 kN |

(fortgesetzt)

| Stahl | Geschwindigkeit Einlauf | Geschwindigkeit Auslauf | Walzkraft | Zug |
|---|---|---|---|---|
| B | 133 m/min | 300 m/min | 844 kN | 67 kN |
| C | 304 m/min | 670 m/min | 755 kN | 65 kN |
| D | 219 m/min | 390 m/min | 918 kN | 68 kN |

Tabelle 4, Angaben in Masse-%, Rest Al und unvermeidbare Verunreinigungen

| Al-Überzug | Mg | Si | Fe |
|---|---|---|---|
| Z1 | 0,3 | 9,5 | 3 |
| Z2 | -- | 9,5 | 3,5 |
| Z3 | -- | 10 | 3 |

Tabelle 5

| Kaltband | Stahl | Überzug | AG [g/m²]* | tG [min] | TG [°C] |
|---|---|---|---|---|---|
| K1 | A | Z2 | 69 | 5 | 925 |
| K2 | B | Z1 | 70 | 5 | 925 |
| K3 | C | Z2 | 75 | 5 | 920 |
| K4 | D | Z3 | 65 | 6 | 925 |
| K5 | B | Z1 | 70 | 6 | 900 |
| K6 | D | Z3 | 71 | 6 | 920 |

Tabelle 6

| Kaltband | SDR Kaltband | SDR schmelztauch | SDR Blechbauteil | normierte Bruchfläche SFC |
|---|---|---|---|---|
| K1 | 27 | 19 | 26 | 105 % |
| K2 | 25 | 15 | 23 | 95 % |
| K3 | 24 | 15 | 23 | 94 % |
| K4 | 18 | 11 | 17 | 92 % |
| K5 | 28 | 20 | 26 | 99 % |
| K6 | 21 | 12 | 20 | 92 % |

**Patentansprüche**

1. Blechbauteil,

   - das durch ein warmumgeformtes Stahlflachprodukt gebildet ist,

      das ein Stahlsubstrat, welches, in Masse-%, aus

         C: 0,1 - 0,4 %,
         Mn: 0,5 - 3,0 %,
         Si: 0,05 - 0,5 %,
         Cr: 0,005 - 1,0 %,

B: 0,0005 - 0,01 %,
sowie jeweils optional einem oder mehreren der in der Gruppe "V, Ti, Nb, Al, Ni, Cu, Mo, W" zusammengefassten Legierungselemente mit der Maßgabe, dass die Gehalte an dem jeweils optional vorhandenen Legierungselement wie folgt zu bemessen sind:

V: 0,001 - 0,2 %,
Ti: 0,001 - 0,1 %,
Nb: 0,001 - 0,1 %,
Al: 0,01 - 0,2 %,
Ni: 0,01 - 0,4 %,
Cu: 0,01 - 0,8 %,
Mo: 0,002 - 1,0 %,
W: 0,001 - 1,0 %,

und als Rest aus Eisen und unvermeidbaren Verunreinigungen besteht, wobei zu den unvermeidbaren Verunreinigungen Gehalte von weniger als 0,1 % P, von weniger als 0,05 % S und von weniger als 0,01 % N gehören,
und
eine auf das Stahlsubstrat aufgetragene Korrosionsschutzschicht auf Basis von Aluminium umfasst,
wobei das Bauteil optional gehärtet ist,

**dadurch gekennzeichnet, dass** an der freien Außenseite der Korrosionsschutzbeschichtung ein Verklebungsabschnitt vorgesehen ist, der zum Auftrag eines Klebstoffs für eine Verklebung des Blechbauteils mit einem weiteren Bauteil bestimmt ist, und **dass** die Oberfläche der Korrosionsschutzbeschichtung mindestens im Bereich ihres Verklebungsabschnitts einen gemäß ISO 25178 bestimmten SDR-Wert von 3 - 30 % aufweist.

2. Blechbauteil nach Anspruch 1, **dadurch gekennzeichnet, dass** im Verklebungsabschnitt die normierte Spitzenzahl RPc nicht mehr als 200 pro cm beträgt.

3. Blechbauteil nach einem der voranstehenden Ansprüche, **dadurch gekennzeichnet, dass** die gemittelte Rautiefe Rz im Verklebungsabschnitt nicht mehr als 2 $\mu$m beträgt.

4. Blechbauteil nach einem der voranstehenden Ansprüche, **dadurch gekennzeichnet, dass** die Korrosionsschutzbeschichtung jeweils optional, in Masse-%, 3 - 15 % Si, 2 - 3,5 % Fe und / oder mindestens ein Erdalkali- oder Übergangsmetall enthält, wobei die Gehalte an den Erdalkali- oder Übergangsmetallen in Summe 0,1 - 0,5 % betragen.

5. Blechbauteil nach Anspruch 4, **dadurch gekennzeichnet, dass** die Korrosionsschutzbeschichtung optional ein Erdalkali- oder Übergangsmetall aus der Gruppe "Mg, Ca, Sr, Ba, Zr, Ti" enthält.

6. Verfahren zur Herstellung eines gemäß einem der voranstehenden Ansprüche ausgebildeten Blechbauteils, umfassend folgende Arbeitsschritte:

a) Bereitstellen eines warmgewalzten Stahlflachprodukts, das ein Stahlsubstrat, welches, in Masse-%, aus C: 0,1 - 0,4 %, Mn: 0,5 - 3,0 %, Si: 0,05 - 0,5 %, Cr: 0,005 - 1,0 %, B: 0,0005 - 0,01 %,sowie jeweils optional einem oder mehreren der in der Gruppe "V, Ti, Nb, Al, Ni, Cu, Mo, W" zusammengefassten Legierungselemente mit der Maßgabe, dass die Gehalte an dem jeweils optional vorhandenen Legierungselement wie folgt zu bemessen sind: V: 0,001 - 0,2 %, Ti: 0,001 - 0,1 %, Nb: 0,001 - 0,1 %, Al: 0,01 - 0,2 %, Ni: 0,01 - 0,4 %, Cu: 0,01 - 0,8 %, Mo: 0,002 - 1,0 %, W: 0,001 - 1,0 %, und als Rest aus Eisen und unvermeidbaren Verunreinigungen besteht, wobei zu den unvermeidbaren Verunreinigungen Gehalte von weniger als 0,1 % P, von weniger als 0,05 % S und von weniger als 0,01 % N gehören,
b) optionales Beizen des Warmbands,
c) Kaltwalzen des Warmbands zu einem Kaltband, wobei das Kaltwalzen optional in mehr als einem Walzschritt durchgeführt wird und wobei ebenso optional zwischen den Kaltwalzschritten das jeweils nach dem vorangegangenen Kaltwalzschritt erhaltene kaltgewalzte Band geglüht wird,
d) Beschichten des Kaltbands mit einer Korrosionsschutzbeschichtung auf Basis von Aluminium,
e) Dressierwalzen des mit der Korrosionsschutzschicht versehenen Kaltbands,
f) Abteilen eines Zuschnitts von dem dressiergewalzten Kaltband,

g) Erwärmen des Zuschnitts auf eine Warmumformtemperatur von 850 - 950 °C,

h) Warmumformen des erwärmten Zuschnitts zu dem Bauteil,

**dadurch gekennzeichnet, dass** das Kaltband durch das Kaltwalzen (Arbeitsschritt c)) und/oder das Dressierwalzen (Arbeitsschritt e)) an der freien Außenseite seiner Korrosionsschutzschicht mindestens in einem Oberflächenabschnitt, der beim fertig warmumgeformten Bauteil einen Verklebungsabschnitt bildet, der zum Auftrag eines Klebstoffs für eine Verklebung des Blechbauteils mit einem weiteren Bauteil vorgesehen ist, eine Oberflächentextur aufweist, die ein Wellenlängenmaximum im Bereich von 0,1 mm bis 1,0 mm besitzt.

7.  Verfahren nach Anspruch 6, **dadurch gekennzeichnet, dass** das Kaltband im letzten Walzschritt des Kaltwalzens mit einem Kaltwalzgrad von 10 - 75 %, mit einer Bandgeschwindigkeit am Einlauf des Walzgerüsts von 10 - 600 m/min, mit einer Bandgeschwindigkeit am Auslauf des Walzgerüsts von 20 - 1000 m/min, mit einer Walzkraft von 150 - 1300 kN und einer Zugkraft von 5 - 110 kN kaltgewalzt wird.

8.  Verfahren nach einem der Ansprüche 6 oder 7, **dadurch gekennzeichnet, dass** die Walzenrauheit Ra 1,0 - 5,0 μm bei einer Spitzenzahl Rpc von 15 - 50 1/μm beträgt.

9.  Verfahren nach einem der Ansprüche 6 bis 8, **dadurch gekennzeichnet, dass** der Zuschnitt im Arbeitsschritt g) über eine Dauer von 2 - 15 min bei der Warmumformtemperatur gehalten wird.

10.  Verfahren nach Anspruch 9, **dadurch gekennzeichnet, dass** der Zuschnitt im Arbeitsschritt g) über eine Dauer von 3 - 10 min bei der Warmumformtemperatur gehalten wird.

11.  Verfahren nach einem der Ansprüche 6 bis 10, **dadurch gekennzeichnet, dass** das Bauteil nach oder im Zuge des Arbeitsschritts h) gehärtet wird.

12.  Verfahren nach Anspruch 11, **dadurch gekennzeichnet, dass** das Härten als Pressformhärten einhergehend mit der Warmumformung (Arbeitsschritt h)) durchgeführt wird.

**Claims**

1.  Sheet metal component,
    which is made of a hot-formed flat steel product comprising a steel substrate which, in mass.%, consists of:

    C: 0.1 - 0.4%,
    Mn: 0.5 - 3.0%,
    Si: 0.05 - 0.5%,
    Cr: 0.005 - 1.0%,
    B: 0.0005 - 0.01%,
    and optionally one or more of alloy elements selected from the group consisting of "V, Ti, Nb, Al, Ni, Cu, Mo, W', with the proviso that the contents of the respective optionally present alloy element are to be measured as follows:

    V: 0.001 - 0.2%,
    Ti: 0.001 - 0.1%,
    Nb: 0.001 - 0.1%,
    Al: 0.01 - 0.2%,
    Ni: 0.01 - 0.4%,
    Cu: 0.01 - 0.8%,
    Mo: 0.002 -1.0%,
    W: 0.001 - 1.0%,
    and the remainder of iron and unavoidable impurities, wherein the unavoidable impurities include contents of less than 0.1% P, less than 0.05% S, and less than 0.01% N,
    and
    which comprises a corrosion protection layer based on aluminum applied to the steel substrate,
    wherein the component is optionally hardened,
    **characterized in that** an adhesive section is provided on the free outer surface of the corrosion protection coating, which is intended for applying an adhesive for adhering the sheet metal component to another component, and **in that** the surface of the corrosion protection coating has an SDR value of 3 - 30%, determined according to ISO 25178, at least in the region of the adhesive section.

2. Sheet metal component according to claim 1, **characterized in that** the standardized peak count RPc is not more than 200 per cm in the adhesive section.

3. Sheet metal component according to one of the preceding claims, **characterized in that** the average surface roughness Rz in the adhesive section is not more than 2 $\mu$m.

4. Sheet metal component according to one of the preceding claims, **characterized in that** the corrosion protection coating optionally contains, in mass.%, 3 - 15% Si, 2 - 3.5% Fe, and/or at least one alkaline earth metal or transition metal, wherein the contents of the alkaline earth metal or transition metals are in total 0.1 - 0.5%.

5. Sheet metal component according to claim 4, **characterized in that** the corrosion protection coating optionally contains an alkaline earth metal or transition metal selected from the group consisting of "Mg, Ca, Sr, Ba, Zr, Ti".

6. Method for producing a sheet metal component according to one of the preceding claims, comprising the following work steps:

a) providing a hot-rolled flat steel product comprising a steel substrate, which, in mass.%, consists of C: 0.1 - 0.4%, Mn: 0.5 - 3.0%, Si: 0.05 - 0.5%, Cr: 0.005 - 1.0%, B: 0.0005 - 0.01%, and optionally one or more of alloy elements selected from the group consisting of "V, Ti, Nb, Al, Ni, Cu, Mo, W", with the proviso that the contents of the respective optionally present alloy element are to be measured as follows: V: 0.001 - 0.2%, Ti: 0.001 - 0.1%, Nb: 0.001 - 0.1%, Al: 0.01 - 0.2%, Ni: 0.01 - 0.4%, Cu: 0.01 - 0.8% Mo: 0.002 - 1.0%, W: 0.001 - 1.0%, and the remainder of iron and unavoidable impurities, wherein the unavoidable impurities include contents of less than 0.1% P, less than 0.05% S, and less than 0.01% N,
b) optional pickling of the hot rolled flat steel product,
c) cold rolling the hot rolled flat steel product to form a cold strip, wherein the cold rolling is optionally performed in more than one rolling step, and wherein the respective cold-rolled strip obtained after the previous cold rolling step is optionally annealed between the cold rolling steps,
d) coating the cold strip with a corrosion protection coating based on aluminum,
e) skin-pass rolling the cold strip provided with the corrosion protection layer,
f) sectioning off a blank from the skin-pass rolled cold strip,
g) heating the blank to a hot forming temperature of 850 - 950°C,
h) hot forming the heated blank to form the sheet metal component,

**characterized in that**, by means of the cold rolling (work step c)) and/or the skin-pass rolling (work step e)), the cold strip has, on the free outer surface of its corrosion protection layer at least in a surface portion which forms an adhesive section in the finished hot-formed component, which adhesive section is provided for applying an adhesive for adhering the sheet metal component to a further component, having a surface texture which has a maximum wavelength that is in a range ranging from 0.1 mm to 1.0 mm.

7. Method according to claim 6, **characterized in that** the cold strip is cold rolled in a last rolling step of the cold rolling with a cold deformation of 10 - 75%, at a belt speed of 10 - 600 m/min at the intake of the roll stand, at a belt speed of 20 - 1000 m/min at the output of the roll stand, with a rolling force of 150 - 1300 kN and a tensile force of 5 - 110 kN.

8. Method according to one of claims 6 or 7, **characterized in that** the roll roughness Ra is 1.0 - 5.0 $\mu$m at a peak count RPc of 15 - 50 1/$\mu$m.

9. Method according to one of claims 6 to 8, **characterized in that**, in step g), the blank is kept at the hot forming temperature for a period of 2 - 15 min.

10. Method according to claim 9, **characterized in that**, in step g), the blank is kept at the hot forming temperature for a period of 3 - 10 min.

11. Method according to one of claims 6 to 10, **characterized in that** the component is hardened after or during work step h).

**12.** Method according to claim 11, **characterized in that** the hardening is carried out as a press hardening accompanied by hot forming (work step h)).

**Revendications**

**1.** Composant en tôle,

- lequel est formé par un produit plat en acier formé à chaud
qui est un substrat en acier constitué, en % en masse, de

C : 0,1 à 0,4 %,
Mn : 0,5 à 3,0 %,
Si : 0,05 à 0,5 %,
Cr : 0,005 à 1,0 %,
B : 0,0005 à 0,01 %,
ainsi que, éventuellement respectivement, d'un ou de plusieurs des éléments d'alliage regroupés dans le groupe « V, Ti, Nb, Al, Ni, Cu, Mo, W », à condition que les teneurs en l'élément d'alliage éventuellement respectivement présent soient mesurées comme suit :

V : 0,001 à 0,2 %,
Ti : 0,001 à 0,1 %,
Nb : 0,001 à 0,1 %,
Al : 0,01 à 0,2 %,
Ni : 0,01 à 0,4 %,
Cu : 0,01 à 0,8 %,
Mo : 0,002 à 1,0 %,
W : 0,001 à 1,0 %,
et le reste étant constitué de fer et d'impuretés inévitables, dans lequel des teneurs inférieures à 0,1 % de P, inférieures à 0,05 % de S et inférieures à 0,01 % de N font partie des impuretés inévitables, et
comprend une couche de protection contre la corrosion à base d'aluminium, appliquée sur le substrat en acier,
dans lequel le composant est éventuellement durci,
**caractérisé en ce qu'**il est prévu, sur le côté extérieur libre du revêtement de protection contre la corrosion, une section de collage qui est destinée à l'application d'une colle pour un collage du composant en tôle à un autre composant, **et en ce que** la surface du revêtement de protection contre la corrosion présente, au moins dans la zone de sa section de collage, une valeur SDR allant de 3 à 30 %, déterminée conformément à la norme ISO 25178.

**2.** Composant en tôle selon la revendication 1, **caractérisé en ce que,** dans la section de collage, le nombre de pics RPc normalisé n'est pas supérieur à 200 par cm.

**3.** Composant en tôle selon l'une des revendications précédentes,
**caractérisé en ce que** la profondeur de rugosité Rz moyenne dans la section de collage n'est pas supérieure à 2 μm.

**4.** Composant en tôle selon l'une des revendications précédentes,
**caractérisé en ce que** le revêtement de protection contre la corrosion contient éventuellement respectivement, en % en masse, 3 à 15 % de Si, 2 à 3,5 % de Fe et/ou au moins un métal alcalino-terreux ou un métal de transition, dans lequel les teneurs en métaux alcalino-terreux ou en métaux de transition s'élèvent au total à 0,1 à 0,5 %.

**5.** Composant en tôle selon la revendication 4, **caractérisé en ce que** le revêtement de protection contre la corrosion contient éventuellement un métal alcalino-terreux ou un métal de transition du groupe « Mg, Ca, Sr, Ba, Zr, Ti ».

**6.** Procédé de fabrication d'un composant en tôle réalisé conformément à l'une des revendications précédentes, comprenant les étapes de travail suivantes :

a) fourniture d'un produit plat en acier laminé à chaud qui est un substrat en acier constitué, en % en masse, de C : 0,1 à 0,4 %, Mn : 0,5 à 3,0 % Si : 0,05 à 0,5 %, Cr : 0,005 à 1,0 %, B : 0,0005 à 0,01 %, ainsi que, éventuellement respectivement, d'un ou de plusieurs des éléments d'alliage regroupés dans le groupe « V, Ti, Nb, Al, Ni, Cu, Mo, W », à condition que les teneurs en l'élément d'alliage éventuellement respectivement présent soient mesurées comme suit : V : 0,001 à 0,2 %, Ti : 0,001 à 0,1 %, Nb : 0,001 à 0,1 %, Al : 0,01 à 0,2 %, Ni : 0,01 à 0,4 %, Cu : 0,01 à 0,8 %, Mo : 0,002 à 1,0 %, W : 0,001 à 1,0 %, et le reste étant constitué de fer et d'impuretés inévitables, dans lequel des teneurs inférieures à 0,1 % de P, inférieures à 0,05 % de S et inférieures à 0,01 % de N font partie des impuretés inévitables,

b) décapage éventuel du feuillard à chaud,

c) laminage à froid du feuillard à chaud en un feuillard à froid, dans lequel le laminage à froid est éventuellement effectué en plus d'une étape de laminage, et dans lequel également éventuellement, entre les étapes de laminage à froid, le feuillard laminé à froid obtenu respectivement après l'étape de laminage à froid précédente est recuit,

d) revêtement du feuillard à froid avec un revêtement de protection contre la corrosion à base d'aluminium,

e) laminage de dressage du feuillard à froid pourvu de la couche de protection contre la corrosion,

f) découpage d'un flan à partir du feuillard à froid dressé par laminage,

g) chauffage du flan à une température de formage à chaud allant de 850 à 950 °C,

h) formage à chaud du flan chauffé pour obtenir le composant,

**caractérisé en ce que,** sous l'action du laminage à froid (étape de travail c)) et/ou du laminage de dressage (étape de travail e)), le feuillard à froid présente, sur le côté extérieur libre de sa couche de protection contre la corrosion, au moins dans une section de surface qui forme, dans le composant fini formé à chaud, une section de collage qui est prévue pour l'application d'une colle pour un collage du composant en tôle à un autre composant, une texture de surface possédant un maximum de longueur d'onde dans la plage allant de 0,1 mm à 1,0 mm.

7. Procédé selon la revendication 6, **caractérisé en ce que** le feuillard à froid est laminé à froid dans la dernière étape de laminage du laminage à froid avec un taux de laminage à froid allant de 10 à 75 %, avec une vitesse de feuillard à l'entrée de la cage de laminoir allant de 10 à 600 m/min, avec une vitesse de feuillard à la sortie de la cage de laminoir allant de 20 à 1000 m/min, avec une force de laminage allant de 150 à 1300 kN et une force de traction allant de 5 à 110 kN.

8. Procédé selon l'une des revendications 6 ou 7, **caractérisé en ce que** la rugosité de laminage Ra va de 1,0 à 5,0 μm pour un nombre de pics Rpc allant de 15 à 50 1/μm.

9. Procédé selon l'une des revendications 6 à 8, **caractérisé en ce que,** à l'étape de travail g), le flan est maintenu à la température de formage à chaud pendant une durée allant de 2 à 15 minutes.

10. Procédé selon la revendication 9, **caractérisé en ce que,** à l'étape de travail g), le flan est maintenu à la température de formage à chaud pendant une durée allant de 3 à 10 minutes.

11. Procédé selon l'une des revendications 6 à 10, **caractérisé en ce que** le composant est durci après ou au cours de l'étape de travail h).

12. Procédé selon la revendication 11, **caractérisé en ce que** le durcissement est effectué sous forme de durcissement par pressage parallèlement au formage à chaud (étape de travail h)).

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2008053273 A1
- WO 2019002026 A1
- WO 2019192703 A1

**In der Beschreibung aufgeführte Nicht-Patentliteratur**

- BETAMATE™ 1620 MB. Dow Europe GmbH, 29. Juni 2010